# EUROPÄISCHE PATENTSCHRIFT

(11) **EP 2 268 957 B1**
(45) Veröffentlichungstag und Bekanntmachung des Hinweises auf die Patenterteilung: **22.01.2014**
(21) Anmeldenummer: 09726953.4
(22) Anmeldetag: 26.03.2009
(51) Int. Cl.: F16L 27/02

(54) **ROHRKUPPLUNG**
PIPE COUPLING
RACCORD TUBULAIRE

(30) Priorität: 02.04.2008 AT 5162008
(43) Veröffentlichungstag der Anmeldung: 05.01.2011
(73) Patentinhaber: E. Hawle Armaturenwerke GmbH, 4840 Vöcklabruck (AT)
(72) Erfinder: BERGER, Christian, A-4650 Lambach (AT)
(74) Vertreter: Puchberger, Peter
(86) Internationale Anmeldenummer: PCT/EP2009/002203
(87) Internationale Veröffentlichungsnummer: WO 2009/121512

(56) Entgegenhaltungen:
- DE-B- 1 099 286
- GB-A- 2 066 399
- US-A- 4 482 171
- US-A- 4 840 410
- US-A- 5 192 094
- US-B1- 6 257 625

## Beschreibung

Die Erfindung betrifft eine flexible teleskopische Rohrkupplung gemäß dem Oberbegriff des Anspruchs 1.

Weiters betrifft die Erfindung eine Armatur und ein Rohrmuffenstück in Kombination mit der Rohrkupplung.

Da es für die Winkelstellung zwischen zwei Anschlussrohren oder einem Anschlussrohr und einer Armatur eine praktisch unendliche Zahl von Winkeisteltungen gibt, soll die Rohrkupplung für einen in der Praxis üblicherweise auftretenden Winkelbereich verwendbar sein. Damit soll vermieden werden, dass eine große Anzahl verschiedener Rohrkrümmer bereitgestellt werden müssen. Überdies ist es ein häufig auftretendes Problem, dass die Winkelstellungen der Anschlussrohre und deren Distanz zueinander zufolge Setzungen im Erdreich erst bei der Montage erkennbar werden und etwaige Änderungen in der Winkelstellung und Distanz leicht ausgleichbar sein sollen.

Somit besteht Bedarf für eine Rohrkupplung, die sowohl ihrer Länge als auch in ihrer Winkelstellung verstellbar und in der letztendlich gewählten Stellung fixierbar ist. Dabei soll der Fließquerschnitt strömungsgünstig gehalten werden und die Rohrkupplung muss auch hohe Drücke des Strömungsmediums aushalten. Deshalb soll der Befestigungsdruck auch bei Schrägstellung gleichmäßig auf die Befestigungselemente verteilt werden.

Die US 6,257,625 B1 zeigt eine flexible teleskopische Rohrkupplung zum Verbinden von Anschlussrohren, wobei die Rohrkupplung zwei Anschlussstutzen und eine Fixiervorrichtung umfasst. Eine axiale Winkelabweichung zwischen den zu verbindenden Rohren kann durch diese Vorrichtung nicht ausgeglichen werden. Die US 5,192,094 zeigt ebenso eine flexible teleskopische Rohrkupplung, bei der Winkelabweichungen in geringfügigem Ausmaß dadurch ausgeglichen werden können, dass ein geringes Spiel zwischen dem Fixierelement und der das Fixierelement aufnehmenden Bohrung vorgesehen ist. Der tolerierbare Winkelbereich, der durch diese Konstruktion erreicht wird, ist jedoch äußerst eingeschränkt. Die US 4,482,171 zeigt eine weitere flexible teleskopische Rohrkupplung gemäß dem Oberbegriff des Anspruchs 1. Es sind Kugelscheiben vorgesehen, die an einer Seite konvex ausgebildet sind, um geringfügige Winkelabweichungen ausgleichen zu können.

Weitere flexible teleskopische Rohrkupplungen sind aus den Druckschriften DE 1099286, US 4,840,410 sowie GB 2066399 bekannt.

Alle bekannten Vorrichtungen aus dem Stand der Technik haben jedoch den Nachteil, dass bei Fixierung der Rohrkupplung in einem Winkel das Verschrauben der Fixierelemente mit den entsprechenden Muttern zu einer starken Belastung der jeweiligen Flanschbereiche führt. Eine Schrägstellung der Fixierelemente ist zwar notfalls tolerabel, wenn sie beispielsweise durch Erdbewegungen verursacht wird. Der tolerierbare Winkelbereich ist jedoch ausgesprochen eingeschränkt.

Es ist somit Aufgabe der Erfindung, eine flexible teleskopische Rohrkupplung bereitzustellen, welche eine Fixierung der Anschlussstutzen in beliebiger Distanz und Winkelstellung möglich macht, ohne dass bei der Fixierung des Fixierelements übermäßiger Anpressdruck auf die Flansche der Rohrendstücke entsteht.

Diese Aufgabe wird erfindungsgemäß dadurch gelöst, dass die Fixierelemente beiderseits der Aufnahmelöcher in Kugelscheiben gelagert sind, die wenigstens an einer Seite konvex ausgebildet sind, wobei die konvexe Seite der Kugelscheiben an den beiden außenliegenden Flächen der Flansche in Erweiterungsfräsungen der Flansche eingreift.

Durch dieses erfindungsgemäße Merkmal wird der Befestigungsdruck der Befestigungsmuttern auch in Schrägstellung des Fixierelements voll auf die Flansche übertragen und die benötigte Fixierung ist auch bei Schrägstellung der Anordnung gewährleistet.

Die Erfindung ist durch die Merkmale der Patentansprüche und durch Merkmale der Zeichnungen und der Beschreibung gekennzeichnet.

Wenn die erfindungsgemäße Rohrkupplung zur Verbindung eines ersten Anschlussrohres mit einem zweiten Anschlussrohr dienen kann, dann schließt dies auch ein, dass eines oder beide Anschlussrohre Bestandteil zB eines Gehäuses einer Armatur oder sonstigen Apparatur ist. Der Querschnitt der Anschlussrohre und auch der Rohranschlussflansche der Rohrkupplung ist üblicherweise kreisförmig, kann aber davon abweichend ausgebildet sein.

Zur Kupplung von zwei Anschlussrohren ist das erste Anschlussrohr mit einem ersten Anschlussstutzen der Rohrkupplung verbindbar und in gleicher Weise ist das zweite Anschlussrohr mit dem zweiten Anschlussstutzen der Rohrkupplung verbindbar. Der erste Anschlussstutzen weist eine Gelenkpfanne mit einem Gelenkpfannenabschnitt auf, in welchem ein Gelenkkugelabschnitt eines Verbindungsrohres schwenkbar gelagert ist. Dieser Gelenkpfannenabschnitt weist eine nach Innen weisende sphärisch konkave Gleitfläche auf, in dem die nach außen gerichtete konvexe Gleitfläche des Gelenkkugelabschnittes schwenkbar und verschiebbar gelagert ist. Durch Anschlagelemente ist der Schwenkbereich der Gelenkkugel im Gelenk in der Gelenkpfanne begrenzt, um die Rohrkupplung dicht zu halten.

Damit die Rohrkupplung auch einen Längenausgleich ermöglicht, der bei Änderungen der Winkelstellung der Anschlussrohre üblicherweise auftritt, weist das Verbindungsrohr einen Teleskoprohrabschnitt auf, der gegenüber dem zweiten Anschlussstutzen abgedichtet und teleskopisch verschiebbar ist. Dabei kann der Teleskoprohrabschnitt entweder innerhalb des Verbindungsrohres oder außerhalb des Verbindungsrohres geführt sein. Aus Gründen der Beibehaltung des Fließquerschnittes wird es vorteilhaft sein, wenn der zweite Anschlussstutzen den annähernd gleichen Innendurchmesser hat wie das zweite Anschlussrohr und unter Vermeidung einer Strömquerschnittsverengung der Teleskoprohrabschnitt des Verbindungsrohres außerhalb des Anschlussstutzen angeordnet ist.

Gemäß Erfindung ist der erste Anschlussstutzen und der zweite Anschlussstutzen mittels zumindest eines Fixierelementes in ihrer Lage und Distanz zueinander fixierbar. Das Fixierelement reicht jedenfalls vom ersten Anschlussstutzen zum zweiten Anschlussstutzen und überdrückt den Bereich des Gelenkpfannenabschnitts und des Teleskoprohrabschnitts. Die Anordnung des Fixierelementes dient dazu, den Rohrkupplung in seiner gewählten Winkellage und Längenerstreckung zu fixieren.

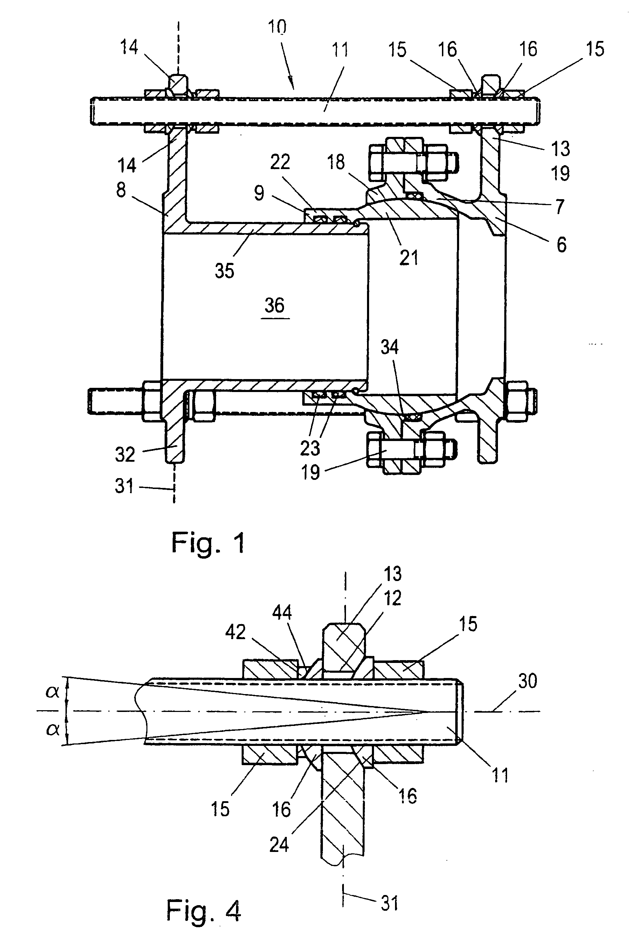

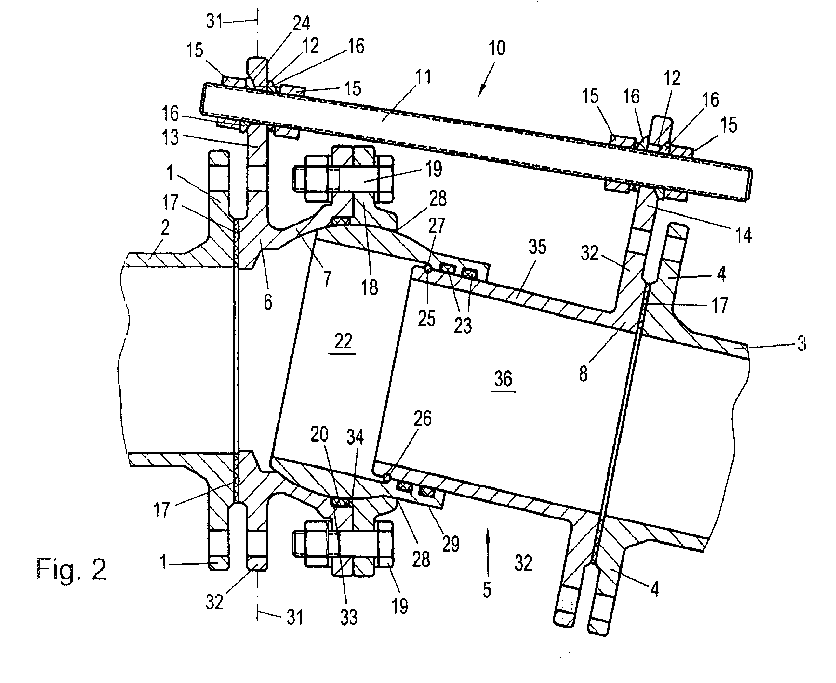

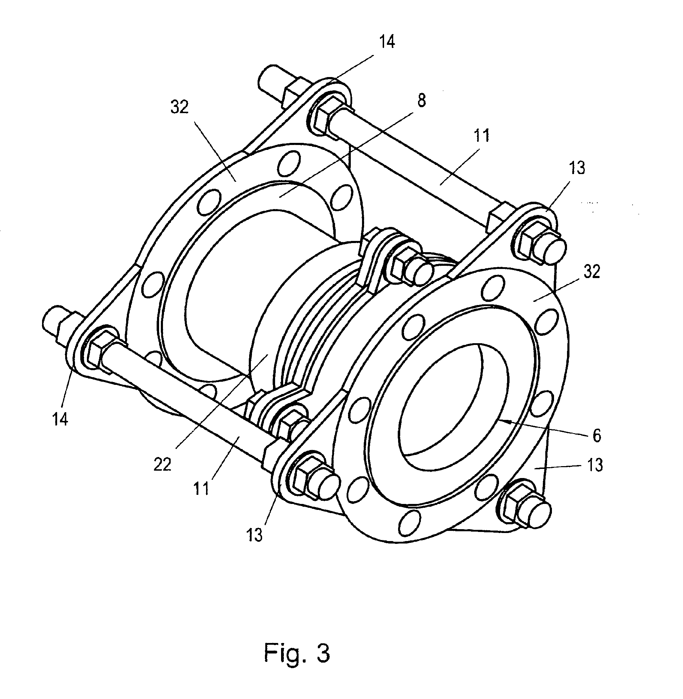

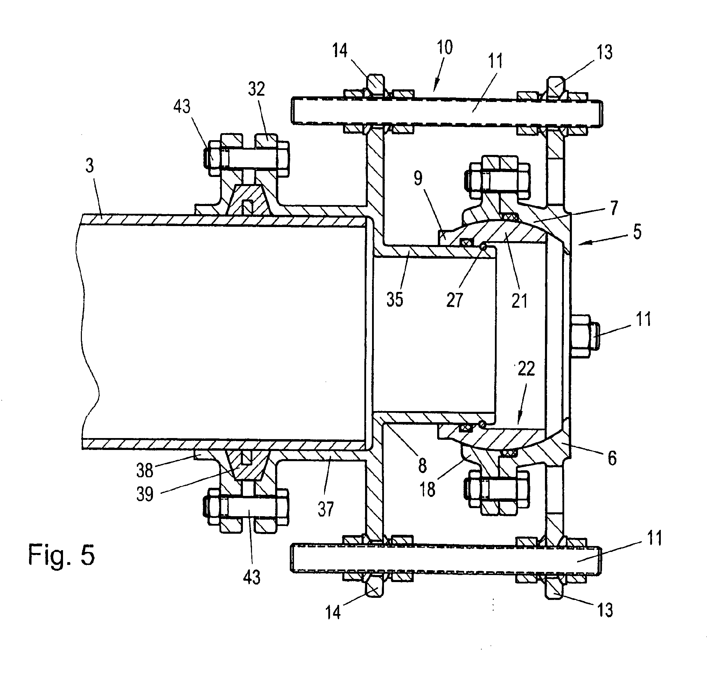

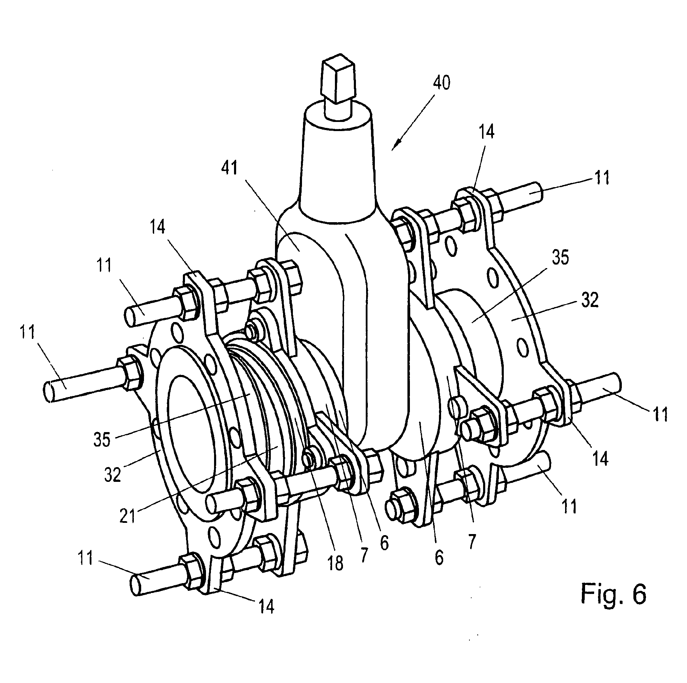

Im folgenden wird die Erfindung anhand von Ausführungsbeispielen näher erläutert. Die Figuren 1 und 2 zeigen im Längsschnitt zwei Funktionsstellungen einer Rohrkupplung. Die Fig.3 zeigt die Stellung gemäß Fig. 1 in Schrägansicht. Fig. 4 zeigt im Schnitt ein Detail. Fig. 5 ist ein Längsschnitt durch eine weitere Ausführung als Rohrmuffenstück und Fig. 6 zeigt eine Armatur, die beidseitig eine Rohrkupplung trägt.

Fig. 1 und 3 zeigen ein Ausführungsbeispiel für die erfindungsgemäße Rohrkupplung in gerade gestreckter Stellung. Dies bedeutet, dass der Rohrkupplung die maximale Erstreckung hat und winkelmässig auf 180° eingerichtet ist, sodass die beiden vier nicht dargestellten Anschlussrohre genau fluchten.

Fig. 2 zeigt - um 180° gedreht - die Rohrkupplung in abgewinkelter Stellung zwischen zwei Anschlussrohren 2 und 3.

Der Anschlussflansch 1 des ersten Anschlussrohrs 2 kann mit diesem einstückig sein, wie in Fig. 2 dargestellt oder kann auf dem Anschlussrohr auch als getrennter Bauteil aufgesetzt sein. Das zweite Anschlussrohr 3 weist in ähnlicher Weise den Anschlussflansch 4 auf. Die erfindungsgemäße Rohrkupplung 5 soll die beiden Anschlussrohre 2 und 3 miteinander fest und dicht verbinden.

Die Rohrkupplung umfasst einen ersten Anschlussstutzen 6 mit einem Gelenkpfannenabschnitt 7 und einen zweiten Anschlussstutzen 8 mit einem Stutzenrohr 35. Der Strömungskanal 36 für das Strömungsmedium wird durch das Verbindungsrohr 22 zwischen den beiden Anschlussstutzen 6 und 8 geschlossen.

Weiters umfasst die Rohrkupplung eine Fixiervorrichtung 10 mit ein oder mehreren Fixierelementen 11, weiche sich entlang der Rohrkupplung erstreckt und den ersten Anschlussstutzen 6 mit dem zweiten Anschlussstutzen 8 fest verbinden kann. Im dargestellten Ausführungsbeispiel der Figuren 1 bis 3 sind drei Fixierelemente 11 in Form von Fixierstangen vorgesehen, die zumindest an den Endbereichen als Gewindestangen ausgebildet sind. Die Fixierstangen ragen in Aufnahmelöcher 12, die in radial abstehenden Flanschen 13, 14 der beiden Anschlussstutzen vorgesehen sind. Mittels der Muttern 15 und der Kugelscheiben 16 können die beiden Flansche 13, 14 und damit die zugehörigen Anschlussstutzen gerade oder in jeder Richtung winkelig zueinander fixiert werden.

In den Figuren nicht eingezeichnet sind die Befestigungsschrauben zum Verschrauben der Anschlussflansche 1, 4 mit den einander zugeordneten Rohranschlussflanschen 32 der Rohrkupplung , wobei zur besseren Abdichtung auch noch Dichtringe 17 vorgesehen sind.

Die Gelenkpfanne umfasst den Gelenkpfannenabschnitt 7 und einen Aufsatzring 18, der mittels der Schrauben 19 an den Anschlussstutzen 6 anschraubbar ist, wodurch die Gelenkpfanne komplettiert wird. Der Dichtungsring 20 in der Ringnut 33 erhöht die Dichtung zwischen den gewölbten Flächen der Gelenkpfanne und der Gelenkkugel des Gelenkkugelabschnittes 21. Der Gelenkkugelabschnitt ist Teil des Verbindungsrohres 22 mit dem Teleskoprohrabschnitt 9. Dieser sitzt verschiebbar auf dem Stutzenrohr 35 des zweiten Anschlussstutzens 8. Das Verbindungsrohr 22 ist mit seinem Teleskoprohrabschnitt 9 gegenüber dem Stutzenrohr 35 des Anschlussstutzens 8 in axialer Richtung verschiebbar, wodurch die Gesamtlänge der Rohrkupplung den Gegebenheiten angepasst werden kann. Dichtungsringe 23 bewirken die Abdichtung zwischen dem Teleskoprohrabschnitt 9 und dem Stutzenrohr 35.

Zur Fixiervorrichtung 10 ist zu bemerken, dass sie zumindest je drei Flansche 13, 14 oder mehr und die entsprechende Zahl Fixierelement umfasst. Die radial vorstehenden Flansche 13, 14 sind im vorliegenden Ausführungsbeispiel einstückig mit dem ringförmigen Rohranschlussflansch 32 zur Verschraubung mit den Anschlussflanschen 1, 4, die ebenfalls ringförmig sind oder jedenfalls der Querschnittsform der Anschlussrohre 2, 3 angepasst sind. Siehe dazu Fig. 3.

Der Lochdurchmesser der Aufnahmelöcher 12 ist etwas größer als es dem Durchmesser der Fixierstangen 11 entspricht. Damit ist ein Schrägstellen der Fixierstangen 11 in den Aufnahmelöchern 12 möglich. Die jeweils zwischen den Befestigungsmuttem 15 zu beiden Seiten der Flansche 13, 14 angeordneten Kugelscheiben 16 weisen jeweils eine konvex gebogene und eine gerade Seite auf. Die gebogene oder spherische Seite ist bevorzugt als Kugelkalotte ausgebildet und greift an den beiden außenliegenden Flächen der Flansche 13, 14 in Erweiterungsfräsungen 24 der Flansche ein. Dadurch wird der Befestigungsdruck der Befestigungsmuttem 15 auch in Schrägstellung der Fixierstange 11 voll auf den Flansch 13 und 14 übertragen und die Fixierung erfolgt auch bei Schrägstellung der Anordnung gegenüber der Flanschebene 31 wie in Fig. 2 dargestellt.

Die Fig. 4 zeigt die Anordnung am Aufnahmeloch 12 in vergrößerter Darstellung, wobei zwischen der innenliegenden Mutter 15 und der zugeordneten Kugelscheibe 16 noch zusätzlich eine Zwischenscheibe 42 angeordnet ist, die den Anpressdruck beim Festziehen der Muttern verteilt und eine feste Schraubverbindung zum Flansch 13 auch in Schrägstellung des Fixierelementes 11 ermöglicht. Die Zwischenscheibe 42 weist eine der konvexen Fläche der Kugelscheibe 16 angepasste Erweiterungsfräsung 44 auf. Der Winkel α zeigt nicht maßstäblich einen Schwenkbereich für die Längsachse 30 des Fixierelementes 11 gegenüber der Senkrechten auf die Flanschebene 31, innerhalb welchem ein jeweils beidseitiges Festschrauben am Flansch 13 und 14 mit den beiden Schraubmuttem 15 erzielt wird. Damit wird ein weitgehend spannungsfreies Fixieren der 3-dimensionalen Anordnung der Rohrkupplung ermöglicht.

Die erfindungsgemäße Rohrkupplung ermöglicht die feste und dauerhafte Verbindung zwischen den zwei Anschlussrohren auch im abgewinkelten Zustand. Dabei wird der Strömungsquerschnitt zwischen den Rohren ohne Unterbrechung beibehalten, sodass es zu keinen oder nur geringen Strömungsverwirbelungen kommt.

Die Rohrkupplung kann auch dazu dienen, einen Längenausgleich zwischen den Anschlussrohren herzustellen.

Damit die Rohrkupplung nur so weit in ihrer Länge und Winkelstellung verstellt werden kann, dass er dennoch dicht bleibt, sind die Verstellmöglichkeiten durch Anschläge begrenzt. Das Stutzenrohr 35 weist an der Außenseite des Rohres einen Anschlag 25 auf, der durch einen Anschlagring gebildet ist, der in einer Nut 26 des Stutzenrohres 35 sitzt. Als Gegenstück weist der Gelenkkugelabschnitt 21 eine Anschlagkehle 27 auf, die am Anschlag 25 anschlägt.

Zur Vermeidung einer zu starken Schrägstellung des Gelenkes weist die Gelenkpfanne an dem durch den Aufsatzring gebildeten Ende eine Anschlagkante 28 auf, die durch Anschlag auf die Außenfläche 29 des Verbindungsrohres 22 in jeder dreidimensionalen Winkelstellung begrenzt ist.

Das Material für die Rohrkupplung ist bevorzugt Metall, welches gewünschtenfalls lackiert oder beschichtet sein kann. Die Anschlussstutzen 6, 8 und das Verbindungsrohr mit dem Gelenkkugelabschnitt sind bevorzugt aus Metallguss hergestellt. Die Fixierstangen 11 bestehen bevorzugt aus Stahl, wie er für Gewindestangen üblicherweise Verwendung findet.

Das Metall für die Gussteile ist bevorzugt Gusseisen, es kann aber beispielsweise auch Edelstahl oder eine Messinglegierung verwendet werden. Der Rohrkupplung kann aber auch aus Kunststoff hergestellt werden, soweit die Festigkeit des Materials den Notwendigkeiten entspricht.

Die dargestellten Kugelscheiben 16 weisen, wie zuvor beschrieben, je eine konvexe gebogene Seite und eine gerade Seite auf und erlauben damit das Festschrauben auch bei einer Winkelstellung ungleich 90° zwischen der Achse des stangenförmigen Fixierelementes und der Flanschebene 31. Die Kugelscheiben können aber auch an beiden Flächen konvex ausgebildet sein. Die wahlweise vorgesehenen Erweiterungsfräsungen 24, 44 können auch schon beim Gießen des Teiles erzeugt werden.

Das Ausführungsbeispiel zeigt, dass das Stutzenrohr 35 in das Verbindungsrohr 22 einschiebbar ist. Es kann aber auch das Stutzenrohr 35 mit größerem Durchmesser auf den Teleskoprohrabschnitt 9 des Verbindungsrohres aufgeschoben werden, wobei die Verschiebemöglichkeit durch die Gelenkkugel begrenzt würde.

Bei den Ausführungsbeispielen gemäß den Figuren 5 und 6 ist die flexible teleskopische Rohrkupplung in einer etwas anderen Ausführungsform dargestellt. Gleiche oder gleichwirkende Teile sind mit den gleichen Bezugszeichen versehen, wie in den Figuren 1 bis 4.

Die Fig. 5 zeigt die funktionelle Kombination einer flexiblen teleskopischen Rohrkupplung mit einem Rohrmuffenstück 37. Das Rohrmuffenstück 37 dient der festen Verbindung des Einsteckendes des Anschlussrohres 3 mit der Rohrkupplung 5. Die genaue Art der Verbindung zwischen der Muffe und dem Anschlussrohr 3 ist in Fig. 5 nur schematisch angedeutet. Als Beispiel weist der Muffenrand einen Rohranschlussflansch 32 auf, an den der das Anschlussrohr 3 umschließende Klemmring 38 angeschraubt werden kann. Zwischen Rohranschlussflansch 32 und Klemmring 38 befindet sich ein Klemmelement 39, welches beim Festziehen der Schrauben 43 gegen die äußere Umfangsfläche des Anschlussrohres 3 gepresst wird und somit das Anschlussrohr 3 fest in der Muffe gehalten wird. Diesbezügliche Konstruktionen sind dem Fachmann geläufig und können auf verschiedenste Weise variieren.

In Fig. 5 ist der Anschlussstutzen 8 (siehe Fig. 2) mit der Muffe des Anschlussstutzens 37 einstückig ausgebildet. Zufolge der übrigen oben beschriebenen Bauteile der Rohrkupplung kann die Kupplung mit einem weiterführenden, hier nicht dargestellten, Leitungsstück oder dem Gehäuse einer Armatur in einem von 180° abweichenden Winkel und der Möglichkeit einer Distanzverstellung angeschlossen werden, wie dies zB in Fig. 2 mit dem Anschlussrohr 2 dargestellt ist. Die Fixierelemente 11 sind vierfach und jeweils in einem Winkel von 90° angeordnet. Damit ist eine dreidimensionale Fixierung sowohl hinsichtlich der Winkelstellung als auch hinsichtlich der Längenerstreckung der Rohrkupplung sichergestellt.

In Fig. 6 ist in Schrägansicht eine Armatur 40 dargestellt, wie sie zB als Schieber oder als Ventil Verwendung finden kann. Zu beiden Seiten der Armatur 40 ist deren Gehäuse 41 als Anschlussstutzen 6 ausgebildet. Daran schließt sich jeweils die Rohrkupplung an, wie sie oben beschrieben ist. Beide Anschlussstutzen 6 bilden den Gelenkpfannenabschnitt 7, der jeweils durch den Aufsatzring 18 zur Gelenkpfanne komplettiert wird. Darin befindet sich schwenkbar der Gelenkkugelabschnitt 21, der mit seinem Teleskopabschnitt 9 auf dem Stutzenrohr 35 teleskopisch verschiebbar ist. Das Stutzenrohr 35 ist einstückig mit dem Rohranschlussflansch 32 und dem davon abstehenden Flansch 14. Es sind jeweils vier Flansche 14 für vier Fixierelemente 11 vorgesehen.

Alternativ kann auch vorgesehen sein, dass die Rohrkupplungskonstruktion umgekehrt vorgesehen ist, wobei der Anschlussstutzen 8 mit den zugehörigen Flanschen 14 und dem Stutzenrohr 35 Bestandteil des Armaturgehäuses 41 ist.

In allen Fällen ist es mit dieser erfindungsgemäßen Armatur leicht möglich, die Armatur zwischen zwei Anschlussrohren zu montieren, wobei eine gute Anpassung an den Abstand der Enden der Anschlussrohre und deren Winkellage durchgeführt werden kann.

**Bezugszeichenliste**

| | | | |
|---|---|---|---|
| 1 | Anschlussflansch | 23 | Dichtungsring |
| 2 | Anschlussrohr erstes | 24 | Erweiterungsfräsung |
| 3 | Anschlussrohr zweites | 25 | Anschlag |
| 4 | Anschlussflansch | 26 | Nut |
| 5 | Rohrkupplung | 27 | Anschlagkehle |
| 6 | Anschlussstutzen | 28 | Anschlagkante |
| 7 | Gelenkpfannenabschnitt | 29 | Außenfläche |
| 8 | Anschlussstutzen | 30 | Längsachse des Fixierelementes |
| 9 | Teleskopabschnitt | 31 | Flanschebene |
| 10 | Fixiervorrichtung | 32 | Rohranschlussflansche |
| 11 | Fixierelemente | 33 | Ringnut |
| 12 | Aufnahmelöcher | 34 | Quetschkante |
| 13 | Flansch | 35 | Stutzenrohr |
| 14 | Flansch | 36 | Strömungskanal |
| 15 | Mutter | 37 | Rohrmuffenstück |
| 16 | Kugelscheiben | 38 | Klemmspannring |
| 17 | Dichtringe | 39 | Klemmelement |
| 18 | Aufsatzring | 40 | Armatur |
| 19 | Schrauben | 41 | Armaturgehäuse |
| 20 | Dichtungsring | 42 | Zwischenscheibe |
| 21 | Gelenkkugelabschnitt | 43 | Schrauben |
| 22 | Verbindungsrohr | 44 | Erweiterungsfräsung |

## Patentansprüche

1. Flexible teleskopische Rohrkupplung zum Verbinden von Anschlussrohren (2, 3), Armaturen (40), wie Schieber und Ventile, Rohrmuffenstücken (37) und dergleichen, wobei die Rohrkupplung zwei Anschlussstutzen (6, 8) und eine Fixiervorrichtung (10) umfasst, und die Fixiervorrichtung (10) ein oder mehrere längliche Fixierelemente (11) aufweist, wobei an den Anschlussstutzen (6, 8) jeweils Flansche (13, 14) angebracht sind, die mittels der Fixierelemente (11) in beliebiger Distanz und Winkelstellung auch ungleich 90° zwischen der Achse des Fixierelements (11) und der Flanschebene (31) fest verbindbar sind, wobei die Fixierelemente (11) mit ihren beiden Enden in Aufnahmelöcher (12) der Flansche (13, 14) einschiebbar und mittels Muttern (15) mit diesen verschraubbar sind, **dadurch gekennzeichnet, dass** die Fixierelemente (11) beiderseits der Aufnahmelöcher (12) in Kugelscheiben (16) gelagert sind, die wenigstens an einer Seite konvex ausgebildet sind, wobei die konvexe Seite der Kugelscheiben (16) an den beiden außenliegenden Flächen der Flansche (13, 14) in Erweiterungsfräsungen (24) der Flansche eingreift.

2. Rohrkupplung nach Anspruch 1, **dadurch gekennzeichnet, dass** die Anschlussstutzen (6, 8) jeweils über einen ringförmigen Rohranschlussflansch (32) verfügen, und die Flansche (13, 14) einstückig mit den Rohranschlussflanschen (32) ausgeführt sind.

3. Rohrkupplung nach einem der Anspruch 1 oder 2, **dadurch gekennzeichnet, dass** der erste Anschlussstutzen (6) eine Gelenkpfanne mit einem Gelenkpfannenabschnitt (7) aufweist, in welchem ein Gelenkkugelabschnitt (21) eines Verbindungsrohres (22) schwenkbar gelagert ist und dass das Verbindungsrohr (22) mit seinem Teleskoprohrabschnitt (9) gegenüber dem zweiten Anschlussstutzen (8) abgedichtet teleskopisch verschiebbar ist.

4. Rohrkupplung nach einem der Ansprüche 1 bis 3, **dadurch gekennzeichnet, dass** die Fixierelemente (11) stangenförmig und bevorzugt als Gewindestangen ausgebildet sind.

5. Rohrkupplung nach einem der Ansprüche 1 bis 4, **dadurch gekennzeichnet, dass** die Fixierelemente (11) mit den Flanschen (13, 14) in senkrechter oder schräger Lage zur Flanschebene (31) verschraubbar sind.

6. Rohrkupplung nach einem der Ansprüche 1 bis 5, **dadurch gekennzeichnet, dass** die Kugelscheiben (16) an einer Seite des Flansches (13, 14) mit ihrer konvexen Fläche und an der anderen Seite des Flansches (13, 14) mit ihrer geraden Fläche anliegen

7. Rohrkupplung nach einem der Ansprüche 1 bis 6, **dadurch gekennzeichnet, dass** jeder Anschlussstutzen (6, 8) mehr als zwei, bevorzugt drei oder vier Flansche (13, 14) für die Anordnung von mehr als zwei, bevorzugt drei oder vier Fixierelementen (11) aufweist.

8. Rohrkupplung nach einem der Ansprüche 1 bis 7, **dadurch gekennzeichnet, dass** die Flansche (13, 14) von den Rohranschlussflanschen (32) in Umfangsrichtung vorstehend angeordnet sind. 3

9. Rohrkupplung nach einem der Ansprüche 3 bis 8, **dadurch gekennzeichnet, dass** die Gelenkpfanne zum Gelenkpfannenabschnitt (7) einen die Gelenkpfanne vervollständigenden Aufsatzring (18) umfasst, wobei zur Abdichtung in einer Ringnut (33) der Gelenkpfannenfläche ein Dichtungsring (20) vorgesehen ist.

10. Rohrkupplung nach Anspruch 9, **dadurch gekennzeichnet, dass** der Dichtungsring (20) durch eine Quetschkante (34) des Aufsatzringes (18) quetschbar ist.

11. Rohrkupplung nach Anspruch 9 oder 10, **dadurch gekennzeichnet, dass** der Aufsatzring (18) eine den Schwenkwinkel des Verbindungsrohres (22) begrenzende Anschlagkante (28) aufweist. 3

12. Rohrkupplung nach einem der Ansprüche 3 bis 11, **dadurch gekennzeichnet, dass** zwischen Verbindungsrohr (22) und einem Stutzenrohr (35) des Anschlussstutzen (8) ein oder mehrere Dichtringe (23) angeordnet sind.

13. Rohrkupplung nach Anspruch 12, **dadurch gekennzeichnet, dass** zur Begrenzung des teleskopischen Auszuges das Stutzenrohr (35) einen Anschlag (25) aufweist, an den ein Anschlag (27) des Verbindungsrohres bei maximalem Auszug anschlägt.

14. Rohrkupplung nach einem der vorgehenden Ansprüche 1 bis 13, **dadurch gekennzeichnet, dass** einer der Anschlussstutzen (6, 8), bevorzugt der den Gelenkpfannenabschnitt (7) tragende Anschlussstutzen (6) Bestandteil einer Armatur (40) ist.

15. Rohrkupplung nach Anspruch 14, **dadurch gekennzeichnet, dass** der Anschlussstutzen (6, 8) einstückig mit dem Armaturengehäuse (41) ist.

16. Rohrkupplung nach einem der Ansprüche 1 bis 15, **dadurch gekennzeichnet, dass** zumindest einer der Anschlussstutzen (6, 8) als Rohrmuffenstück (37) ausgebildet ist.

17. Rohrkupplung nach einem der Ansprüche 1 bis 16, **dadurch gekennzeichnet, dass** zwischen der Kugelscheibe (16) und der Mutter (15) eine Zwischenscheibe (42) vorgesehen ist, die bevorzugt eine an die konvexe Fläche der Kugelscheibe angepasste Erweiterungsfräsung (44) aufweist

18. Armatur wie Schieber oder Ventil, **dadurch gekennzeichnet, dass** an der Einströmöffnung und/oder der Ausströmöffnung eine Rohrkupplung nach einem der Ansprüche 14 bis 17 angeordnet ist.

19. Rohrmuffenstück, **dadurch gekennzeichnet, dass** an dem der Rohrmuffe gegenüberliegenden Ende eine Rohrkupplung nach einem der Ansprüche 1 bis 17 angeordnet ist.

## Claims

1. Flexible telescopic pipe coupling for connection of connecting pipes (2, 3), accessories (40) such as sliding gates and valves, pipe sleeve elements (37) and the like, wherein the pipe coupling comprises two pipe unions (6, 8) and a fixing device (10), and the fixing device (10) exhibits one or more elongated fixing elements (11), the pipe unions (6, 8) each having flanges (13, 14) attached thereto which can be connected securely by means of the fixing elements (11) with any distance and angle even other than 90°, between the axis of the fixing element (11) and the plane (31) of the flange, the fixing elements (11) being insertable with both their ends in receiving holes (12) of the flanges (13, 14) and screwable to these by means of nuts (15), **characterised in that** the fixing elements (11) are mounted on both sides of the receiving holes (12) in domed washers (16) which are convex on at least one side, whereby the convex side of the domed washers (16) engages in milled adapting recesses (24) on the two external surfaces of the flanges (13, 14).

2. Pipe coupling according to claim 1, **characterised in that** the pipe unions (6, 8) each have a ring-shaped pipe connection flange (32), and the flanges (13, 14) are formed in one piece with the pipe connection flanges (32).

3. Pipe coupling according to one of claim 1 or 2, **characterised in that** the first pipe union (6) exhibits a joint socket with a joint socket portion (7) in which a joint ball portion (21) of a connecting pipe (22) is mounted pivotally and **in that** the connecting pipe (22) with its telescopic tubular portion (9) is displaceable telescopically sealed in relation to the second pipe union (8).

4. Pipe coupling according to one of claims 1 to 3, **characterised in that** the fixing elements (11) are embodied in the form of rods and preferably as threaded rods.

5. Pipe coupling according to one of claims 1 to 4, **characterised in that** the fixing elements (11) can be screwed to the flanges (13, 14) in a perpendicular or obliquely inclined attitude to the plane of the flange (31).

6. Pipe coupling according to one of claims 1 to 5, **characterised in that** the domed washers (16) bear with their convex surface on one side of the flange (13, 14) and with their straight surface on the other side of the flange (13, 14).

7. Pipe coupling according to one of claims 1 to 6, **characterised in that** each pipe union (6, 8) exhibits more than two, preferably three or four flanges (13, 14) for the location of more than two, preferably three or four fixing elements (11).

8. Pipe coupling according to one of claims 1 to 7, **characterised in that** the flanges (13, 14) are arranged projecting from the pipe connection flanges (32) in the circumferential direction.

9. Pipe coupling according to one of claims 3 to 8, **characterised in that** the joint socket for the joint socket portion (7) comprises a capping ring (18) which completes the joint socket, with a sealing ring (20) provided for sealing in an annular groove (33) in the joint socket surface.

10. Pipe coupling according to claim 9, **characterised in that** the sealing ring (20) can be squashed by a squashing edge (34) of the capping ring (18).

11. Pipe coupling according to claim 9 or 10, **characterised in that** the capping ring (18) exhibits a stop edge (28) which limits the pivot angle of the connecting pipe (22).

12. Pipe coupling according to one of claims 3 to 11, **characterised in that** one or more sealing rings (23) are arranged between the connecting pipe (22) and a pipe stub (35) of the pipe union (8).

13. Pipe coupling according to claim 12, **characterised in that** to limit the telescopic extension the pipe stub (35) exhibits a stop (25) which bears against a stop (27) of the connecting pipe at maximum extension.

14. Pipe coupling according to one of the preceding claims 1 to 13, **characterised in that** one of the pipe unions (6, 8), preferably the pipe union (6) carrying the joint socket portion (7), is part of an accessory (40).

15. Pipe coupling according to claim 14, **characterised in that** the pipe union (6, 8) is made in one piece with the accessory housing (41).

16. Pipe coupling according to one of claims 1 to 15, **characterised in that** at least one of the pipe unions (6, 8) is embodied as a pipe sleeve element (37).

17. Pipe coupling according to one of claims 1 to 16, **characterised in that** provided between the domed washer (16) and the nut (15) there is an intermediate washer (42) which preferably exhibits a milled adapter (44) matched to the convex surface of the domed washer.

18. Accessory such as sliding gate or valve, **characterised in that** a pipe coupling according to one of claims 14 to 17 is arranged on the inlet opening and/or the outlet opening.

19. Pipe sleeve element, **characterised in that** a pipe coupling according to one of claims 1 to 17 is arranged on the end facing the pipe sleeve.

## Revendications

1. Raccord télescopique flexible pour l'assemblage de tuyaux de raccordement (2, 3), de garnitures (40), comme des curseurs et des vannes, de pièces de manchon (37) et similaires, étant entendu que le raccord comprend deux tubulures de raccordement (6, 8) et un dispositif de fixation (10) et que le dispositif de fixation (10) présente un ou plusieurs éléments de fixation allongés (11), étant entendu que sur les tubulures de raccordement (6, 8) sont à chaque fois montées des collerettes (13, 14) qui peuvent être assemblées de façon fixe au moyen des éléments de fixation (11) à n'importe quelle distance et dans n'importe quel angle, y compris différent de 90°, entre l'axe de l'élément de fixation (11) et le plan de la collerette (31), étant entendu que les éléments de fixation (11) peuvent être insérés par leurs deux extrémités dans des trous de logement (12) des collerettes (13, 14) et vissés avec celles-ci au moyen d'écrous (15), **caractérisé en ce que** les éléments de fixation (11) sont montés des deux côtés des trous de logement (12) dans des rondelles sphériques (16) qui sont réalisées dans une forme convexe au moins sur un côté, étant entendu que le côté convexe des rondelles sphériques (16) s'engage dans des fraisages d'élargissement (24) de la collerette sur les deux faces des collerettes (13, 14) situées à l'extérieur.

2. Raccord selon la revendication 1, **caractérisé en ce que** les tubulures de raccordement (6, 8) disposent chacune d'une collerette de tuyau de raccordement de forme annulaire (32) et les collerettes (13, 14) sont réalisées d'une seule pièce avec les collerettes des tuyaux de raccordement (32).

3. Raccord selon l'une des revendications 1 ou 2, **caractérisé en ce que** la première tubulure de raccordement (6) présente un boîtier de rotule avec une section (7) de boîtier de rotule dans laquelle une section de calotte sphérique (21) d'un tuyau d'assemblage (22) est montée de façon pivotante et **en ce que** le tuyau d'assemblage (22) peut coulisser de façon étanche et télescopique avec sa section (9) de tuyau télescopique par rapport à la deuxième tubulure de raccordement (8).

4. Raccord selon l'une des revendications 1 à 3, **caractérisé en ce que** les éléments de fixation (11) sont réalisés en forme de tiges et de préférence en tant que tiges filetées.

5. Raccord selon l'une des revendications 1 à 4, **caractérisé en ce que** les éléments de fixation (11) peuvent être vissés avec les collerettes (13, 14) dans une position perpendiculaire ou oblique par rapport au plan de la collerette (31).

6. Raccord selon l'une des revendications 1 à 5, **caractérisé en ce que** les rondelles sphériques (16) prennent appui sur un côté de la collerette (13, 14) avec leur face convexe et sur l'autre côté de la collerette (13, 14) avec leur face droite.

7. Raccord selon l'une des revendications 1 à 6, **caractérisé en ce que** chaque tubulure de raccordement (6, 8) présente plus de deux, de préférence trois ou quatre collerettes (13, 14) pour l'agencement de plus de deux, de préférence trois ou quatre éléments de fixation (11).

8. Raccord selon l'une des revendications 1 à 7, **caractérisé en ce que** les collerettes (13, 14) sont agencées en saillie des collerettes des tuyaux de raccordement (32) dans la direction périphérique.

9. Raccord selon l'une des revendications 3 à 8, **caractérisé en ce que** le boîtier de rotule comprend vers la section (7) du boîtier de rotule une bague à chapeau (18) complétant le boîtier de rotule, étant entendu qu'une bague d'étanchéité (20) est prévue pour assurer l'étanchéité dans une rainure annulaire (33) de la surface du boîtier de rotule.

10. Raccord selon la revendication 9, **caractérisé en ce que** la bague d'étanchéité (20) peut être écrasée par une arête d'écrasement (34) de la bague à chapeau (18).

11. Raccord selon la revendication 9 ou 10, **caractérisé en ce que** la bague à chapeau (18) présente une arête de butée (28) délimitant l'angle de pivotement du tuyau d'assemblage (22).

12. Raccord selon l'une des revendications 3 à 11, **caractérisé en ce qu'**un ou plusieurs joints annulaires (23) sont agencés entre le tuyau d'assemblage (22) et un tuyau de support (35) de la tubulure de raccordement (8).

13. Raccord selon la revendication 12, **caractérisé en ce que** pour délimiter l'extension télescopique, le tuyau de support (35) présente une butée (25) contre laquelle une butée (27) du tuyau d'assemblage vient abouter à l'extension maximale.

14. Raccord selon l'une des revendications 1 à 13, **caractérisé en ce qu'**une des tubulures de raccordement (6, 8), de préférence la tubulure de raccordement (6) supportant la section (7) du boîtier de rotule, fait partie intégrante d'une garniture (40).

15. Raccord selon la revendication 14, **caractérisé en ce que** les tubulures de raccordement (6, 8) sont réalisées d'une seule pièce avec le logement (41) de la garniture.

16. Raccord selon l'une des revendications 1 à 15, **caractérisé en ce qu'**au moins une des tubulures de raccordement (6, 8) est réalisée en tant que pièce de manchon (37).

17. Raccord selon l'une des revendications 1 à 16, **caractérisé en ce qu'**il est prévu entre la rondelle sphérique (16) et l'écrou (15) une rondelle intermédiaire (42), qui présente de préférence un fraisage d'élargissement (44) adapté à la face convexe de la rondelle sphérique.

18. Garniture, comme un curseur ou une vanne, **caractérisée en ce qu'**un raccord selon l'une des revendications 14 à 17 est agencé à l'ouverture d'écoulement d'entrée et/ou à l'ouverture d'écoulement de sortie.

19. Pièce de manchon **caractérisée en ce qu'**un raccord selon l'une des revendications 1 à 17 est agencé à l'extrémité opposée au manchon.
